# EUROPÄISCHE PATENTSCHRIFT

(11) **EP 2 683 642 B1**
(45) Veröffentlichungstag und Bekanntmachung des Hinweises auf die Patenterteilung: **14.08.2024**
(21) Anmeldenummer: 12707545.5
(22) Anmeldetag: 02.03.2012
(51) Int. Cl.: B66B 9/187, B66B 9/02

(54) **LIFT FÜR HOCHSPANNUNGS- UND WINDRAD-MASTEN**
LIFT FOR HIGH-VOLTAGE TOWERS AND WIND TURBINE TOWERS
ÉLÉVATEUR POUR PILIERS HAUTE TENSION ET MÂTS D'ÉOLIENNES

(30) Priorität: 09.03.2011 CH 402112011
(43) Veröffentlichungstag der Anmeldung: 15.01.2014
(73) Patentinhaber: HighStep Systems AG, 8953 Dietikon (CH)
(72) Erfinder: MAURER, Andreas, CH-7077 Valbella (CH); MOSETTI, Pascal, CH-5702 Niederlenz (CH)
(74) Vertreter: Troesch Scheidegger Werner AG
(86) Internationale Anmeldenummer: PCT/EP2012/053595
(87) Internationale Veröffentlichungsnummer: WO 2012/119932

(56) Entgegenhaltungen:
- US-A- 5 579 865
- US-A- 5 579 865
- US-B1- 7 281 607

## Beschreibung

Die vorliegende Erfindung betrifft eine Anordnung zum Besteigen von beispielsweise Hochspannungs- und Windrad-Masten gemäss dem Wortlaut nach Anspruch 1 sowie ein Verfahren zum Besteigen eines beispielsweise Hochspannungs- oder Windrad-Mastes.

Für Unterhalts- und Reparaturarbeiten an hohen Masten wie beispielsweise Hochspannungsstromleitungsmasten, Masten für Windanlagen und dgl. gelten erhöhte Sicherheitsanforderungen, so dass aufwendige und teuere Lift- oder Leitersysteme in oder an diesen Masten angeordnet werden müssen. Das Auf- und Absteigen an Leitern ist aber gefährlich und eine Untersuchung der technischen Hochschule Darmstadt beispielsweise ergab, dass ca. 70% der Unfälle in Verbindung mit dem Besteigen von Leitern erfolgten, welche fest montiert sind, wie beispielsweise an den erwähnten Hochspannungsmasten.

Im Stand der Technik werden eine Reihe von sogenannten Steighilfen beschrieben, welche vorgeschlagen werden, um hohe Objekte zu besteigen. So beschreibt beispielsweise die DE 102 01 965 eine Vorrichtung zum Zurücklegen von senkrecht nach oben gerichteten Wegstrecken. Dabei wird eine mittels Muskelkraft betätigbare Steighilfe beschrieben, welche raupenartig an einer ortsfest angebrachten Leiter aufwärts- bzw. abwärtsbewegbar ist. Weitere Steighilfen werden beschrieben beispielsweise in der US 3 968 858, der US 4 310 070 sowie in der WO 2007/051 341.

Im Weiteren beschreibt das US Patent 4 828 072 eine Rettungseinrichtung wie eine Rettungsleiter oder ein Rettungslift, welche bzw. welcher an einer Hausfassade an einer zahnstangenartig ausgebildeten Gleitfläche auf- und abwärts bewegt werden kann. Dabei wir die zu rettende Person mittels eines Gurtsystems am Gleiter oder Lift gehalten, wobei im Weiteren automatisch ansprechende Bremssysteme vorgesehen sind, um ein sicheres Retten einer Person zu ermöglichen. Für die 500 000 errichteten Hochspannungsmasten alleine in Deutschland, ist ein derartiges System nicht geeignet, da es zu aufwendig, zu teuer und auch zu schwerfällig im Betrieb ist.

Ferner ist in der WO 2005/016 461 eine Anordnung zum Auf- und/oder Absteigen beispielsweise von Hochspannungsmasten beschrieben, wobei primär die Besteigung mittels zweier separater Steigkonsolen erfolgt, welche sowohl manuell wie auch mittels motorischem Antrieb verwendet werden können. Gemäss einer Ausführungsvariante wird gar vorgeschlagen, die beiden Steigkonsolen miteinander gekoppelt als Lift zu betreiben.

US 5 579 865 beschreibt eine modulare Gerüstbaugruppe, bei der eine Plattform in einer kontinuierlichen Bewegung nach oben oder unten bewegt werden kann. Ein Plattformschlitten ist mit einem Turm durch federbelastete Reibungsblöcke in Eingriff und dem Turm entlang zweier abgestufter Zahnstangen nach oben oder unten bewegbar.

US 7 281 607 B1 betrifft eine tragbare Hebevorrichtung um Materialien und/oder Personen auf einer Plattform anzuheben und abzusenken, und die auf einer Vielzahl von Oberflächen (temporär) montiert werden kann, beispielsweise an einer Stange oder Masten, einem Baum, einer Leiter oder einer Treppe.

Alle bekannten Systeme haben den Nachteil, dass ein Besteigen beispielsweise der erwähnten Hochspannungsmasten aufgrund der hohen Sicherheitsbestimmungen sehr zeitintensiv, und beschwerlich ist und die Systeme insbesondere bezüglich der zu erwartenden Kosten, speziell im Betrieb, zu teuer sind.

Ein weiterer Nachteil liegt darin, dass die Steiggeräte bzw. Lifte gewichtsmässig schwer sind, so dass ein Benutzen an verschiedenen Masten einen beschwerlichen Transport von einem Masten zum nächsten beispielsweise mit einem Transportfahrzeug bedingt.

Es ist daher eine Aufgabe der vorliegenden Erfindung, eine Einrichtung vorzuschlagen, welche kostengünstig, einfach zu installieren und auch einfach im Gebrauch ist und ein rasches, sicheres und unkompliziertes Besteigen insbesondere der erwähnten Hochspannungsmasten ermöglicht.

Eine weitere Aufgabe besteht darin, ein Steiggerät vorzuschlagen, welches von beispielsweise am Masten angeordneten Besteigungsprofilen autonom ist, an verschiedenen Masten einsetzbar bzw. mobil ist und leicht transportierbar ist.

Vorgeschlagen wird eine Anordnung gemäss dem Wortlaut nach Anspruch 1.

Vorgeschlagen wird eine Anordnung zum Besteigen von Masten wie insbesondere Hochspannungsmasten, Masten von Windanlagen wie für Windräder, hohen Gebäuden, Hochregallager, etc., welche ein längsausgedehntes schienenartiges Profil oder Führungsorgan aufweist, dass U-, V- oder wenigstens nahezu gerade, bandförmig ausgebildet ist, sowie mindestens ein am Profil oder Führungsorgan wieder lösbar befestigbares, tragbares, mobiles Liftelement, welches aus einem entlang dem Profil oder Führungsorgan auf und ab bewegbaren Antriebsteil besteht und einer Plattform für das Aufnehmen von mindestens einer Person oder von Lasten, wobei der Antrieb des Antriebteils von einem im Liftelement angeordneten Energiespeicher, wie einem Akku, einer Batterie oder einem Brennstoffspeicher, speisbar ist. Am Antriebsteil sind das Profil oder Führungsorgan in Längsrichtung gesehen, je seitlich umgreifende Festhalteorgane vorgesehen, welche in festlegender Position einrastbar sind, um ein sicheres Halten des Antriebteils am Profil oder Führungsorgan sicherzustellen.

Der Akku oder die Batterie kann wieder entfernbar im Liftelement, vorzugsweise in der Plattform angeordnet sein.

Gemäss einer Ausführungsvariante wird vorgeschlagen, dass die Plattform wieder entfernbar mit dem Antriebsteil verbunden ist.

Wiederum gemäss einer Ausführungsvariante wird vorgeschlagen, dass das Liftelement teilweise aus Leichtbaustoffen besteht wie faserverstärkte Verbundwerkstoffe, Aluminium, Aluminiumlegierungen und/oder dergleichen, um die Tragbarkeit als Ganzes oder in Teilen zu garantieren.

Weiter wird vorgeschlagen, dass am Antriebsteil mindestens ein Zahnrad vorgesehen ist für die Kraftübertragung vom Antrieb auf das Profil, welches in Längsrichtung verlaufende zahnstangenartige Lochungen oder Öffnungen aufweist.

Weiter wird vorgeschlagen, dass am Antriebsteil mindestens ein in die Zahnstange einrastbares Notstopporgan vorgesehen ist, welches mit einem Positions-, Bewegungs- und/oder Geschwindigkeitssensor wirkverbunden ist.

Wiederum gemäss einer weiteren Ausführungsvariante wird vorgeschlagen, dass das schienenartige Profil aus mindestens zwei oder mehr zusammenfügbaren oder steckbaren Profilelementen besteht, aufweisend eine in Längsrichtung verlaufende Zahnstangeneinteilung. In mindestens einer Wandung jedes Profilelementes sind längsverlaufende Musterelemente angeordnet, mit gleichmässig beabstandetem Lochmuster, welche mit der Zahnstangeneinteilung übereinstimmen. Zwischen je zwei Profilelementen sind je ein Verbindungselement vorgesehen mit einer weiteren Wandung, vorgesehen um an der Wandung je des Profilelementes anzuliegen mit ebenfalls längsverlaufenden zu den Lochmuster deckungsgleichen weiteren Lochmuster, welche somit übereinstimmend beabstandet sind. Profilelemente und das Verbindungselement sind mittels in den Lochungen der Lochmuster angeordneten Nieten, Stifte, Schrauben und dgl. miteinander fest verbunden, derart, dass die Zahnstangeneinteilung gleichbleibend von einem Profilelement zum anderen übergeht.

Anstelle des längsausgedehnten Profils kann das Liftelement an einem Führungsorgan wie einer Säule, einem oder mehreren Stabelementen oder einem oder mehreren Drahtseilen auf- und abwärts bewegt werden.

Wiederum weiter vorgeschlagen wird, dass die Festhalteorgane, wie beispielsweise Gleitrollen, beim Anlegen des Antriebteils an das Profil oder Führungsorgan je seitlich das Profil oder Führungsorgan hintergreifend, automatisch verriegelbar bzw. einklappbar sind.

Weitere Ausführungsvarianten der erfindungsgemässen Anordnung sind in abhängigen Ansprüchen charakterisiert.

Weiter vorgeschlagen wird ein Verfahren zum Besteigen von Masten wie insbesondere von Hochspannungsmasten, Masten für Windanlagen und dgl., wobei an einem am Masten befestigten längsausgedehnten, schienenartigen Profil oder Führungsorgan ein vom Profil oder Führungsorgan autonomes, mobiles und vorzugsweise tragbares (sowie wieder entfernbares) Liftelement am Profil oder Führungsorgan mittels einrastbaren, das Profil oder Führungsorgan je seitlich hintergreifenden oder angreifenden Festhalteorganen (fest am Profil) angeordnet wird. Eine wieder lösbar/entfernbar mit dem Antriebsteil verbundene Plattform wird von mindestens einer Person bestiegen oder mit einer Last beladen, und das Antriebsteil wird von einem Energiespeicher wie einem Akku, einer Batterie oder einem Brennstoffspeicher gespiesen/aktiviert, um entlang des schienenartigen Profils am Masten hochzufahren, wobei der Energiespeicher im Liftelement angeordnet ist.

Ausführungsvarianten des erfindungsgemässen Verfahrens sind in abhängigen Ansprüchen charakterisiert.

Die Erfindung wird nun beispielsweise und unter Bezug auf die beigefügten Figuren näher erläutert.

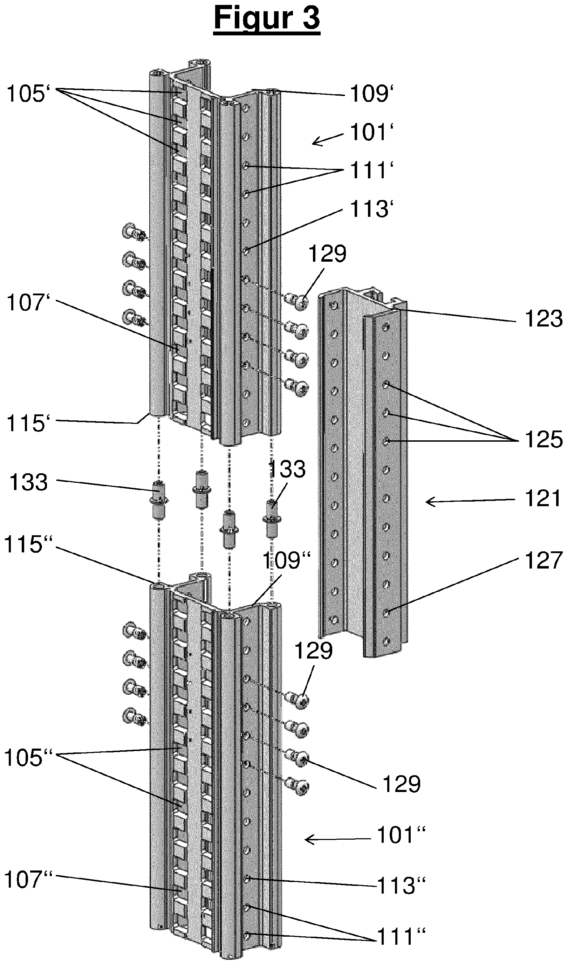

Dabei zeigen:
Fig. 1a und 1b das erfindungsgemässe Liftelement in zwei unterschiedlichen perspektivischen Ansichten, Fig. 2 das erfindungsgemässe Liftelement in den Figuren a und b ebenfalls in perspektivischer Ansicht angeordnet am längsausgedehnten, schienenartigen Profil mit einer Bedienungsperson,
Fig. 3 in schematischer Perspektive zwei zu verbindende schienenartige Profile sowie ein zum Verbinden vorgesehenes Verbindungselement,
Fig. 4 das erfindungsgemässe Liftelement zerlegt in die wichtigsten Einzelteile inkl. einen Ausschnitt des schienenartigen Profils,
Fig. 5 den Antriebsmotor schematisch in Perspektive des erfindungsgemässen Liftelementes,
Fig. 6 in perspektivischer Ansicht die Plattform des Liftelementes,
Fig. 7 anhand der Figuren a bis d schematisch das feste Anordnen des Liftelementes an das schienenartige Profil,
Fig. 8a und 8b schematisch im Schnitt die Funktionsweise eines Notstopporganes des Liftelementes,
Fig. 9 schematisch in Perspektive eine Bedienungskonsole des Liftelementes,
Fig. 10a bis 10c schematisch die mobilen Einheiten des Liftelementes,
Fig. 11 schematisch und in Perspektive ein Befestigungselement zum Befestigen des schienenartigen Profils an einem Masten und
den Lift zur Ausführung von Reparaturarbeiten zu benutzen hat. Die beiden in Figur 3 dargestellten Profilelemente 101' und 101'' weisen einen U-förmigen Querschnitt auf mit in den Ecken des U-förmigen Profils angeordneten Längsrohre 115' und 115''. Wie in Figur 3 deutlich erkennbar, weisen die Profilelemente 101' und 101" eine längsverlaufende Zahnstangeneinteilung 105' und 105'' auf, welche vorgesehen ist, damit das Antriebsteil mittels in die Zahnstangeneinteilung eingreifende Zahnräder aufwärts und abwärts entlang dem Profil bewegt werden kann. Für das Zusammenfügen der beiden Profilelemente 101' und 101'' ist es nun wesentlich, dass die Zahnstangeneinteilung 105' und 105'' von einem Profil zum nächsten gleichbleibend beabstandet weitergeführt wird. Aus diesem Grund wird die Verwendung mindestens eines Verbindungselementes 121 vorgeschlagen, um die gleich bleibende Beabstandung der Zahnstangeneinteilung 105' und 105'' zu garantieren. Die beiden Profilelemente weisen in zwei seitlichen Schenkelflächen 109' und 109'' längsverlaufende Lochmuster 111' und 111'' auf, aufweisend einzelne Lochungen 113' und 113''. In den beiden Seitenschenkel 123 des spiegelsymmetrisch zu den beiden Profilen ebenfalls U-förmig ausgebildeten Verbindungselement 121 sind ebenfalls je in Längsrichtung verlaufende Lochmuster 125 vorgesehen, aufweisend einzelne Lochungen 127. Die einzelnen Lochungen 127 weisen einen wenigstens nahezu gleichen Lochquerschnitt auf, wie die Lochungen 113' und 113'' und sind zudem gleich beabstandet. Die Lochmuster sind genau aufeinanderliegend ausgerichtet, wodurch nun ein Verbinden des Verbindungselementes 121 mit den beiden Profilelementen den Lift zur Ausführung von Reparaturarbeiten zu benutzen hat. Die beiden in Figur 3 dargestellten Profilelemente 101' und 101" weisen einen U-förmigen Querschnitt auf mit in den Ecken des U-förmigen Profils angeordneten Längsrohre 115' und 115''. Wie in Figur 3 deutlich erkennbar, weisen die Profilelemente 101' und 101'' eine längsverlaufende Zahnstangeneinteilung 105' und 105'' auf, welche vorgesehen ist, damit das Antriebsteil mittels in die Zahnstangeneinteilung eingreifende Zahnräder aufwärts und abwärts entlang dem Profil bewegt werden kann. Für das Zusammenfügen der beiden Profilelemente 101' und 101'' ist es nun wesentlich, dass die Zahnstangeneinteilung 105' und 105" von einem Profil zum nächsten gleichbleibend beabstandet weitergeführt wird. Aus diesem Grund wird die Verwendung mindestens eines Verbindungselementes 121 vorgeschlagen, um die gleich bleibende Beabstandung der Zahnstangeneinteilung 105' und 105'' zu garantieren. Die beiden Profilelemente weisen in zwei seitlichen Schenkelflächen 109' und 109'' längsverlaufende Lochmuster 111' und 111'' auf, aufweisend einzelne Lochungen 113' und 113''. In den beiden Seitenschenkel 123 des spiegelsymetrisch zu den beiden Profilen ebenfalls U-förmig ausgebildeten Verbindungselement 121 sind ebenfalls je in Längsrichtung verlaufende Lochmuster 125 vorgesehen, aufweisend einzelne Lochungen 127. Die einzelnen Lochungen 127 weisen einen wenigstens nahezu gleichen Lochquerschnitt auf, wie die Lochungen 113' und 113'' und sind zudem gleich beabstandet. Die Lochmuster sind genau aufeinanderliegend ausgerichtet, wodurch nun ein Verbinden des Verbindungselementes 121 mit den beiden Profilelementen 101' und 102' beispielsweise mit den in Figur 3 dargestellten Nieten 129 ermöglicht wird. Das Einführen der Nieten kann beispielsweise mittels einer sogenannten akkubetriebenen Nietpistole auf einfachste Art und Weise erfolgen. Dass die Zahnstangeneinteilung 105' und 105'' von einem Profil zum nächsten gleich beabstandet weitergeführt wird, wird dadurch erreicht, indem der Abstand der Lochungen in den Seitenwandungen einerseits auf die einzelnen Lochungen 107' und 107'' der Zahnstangeneinteilung 105' und 105'' ausgerichtet sind und zudem analog beabstandet sind. Die in Figur 3 dargestellte Verbindung zweier Profilelemente ist im Übrigen detailliert in der WO 2009/034 010 beschrieben, deren Inhalt hiermit als Bestandteil der vorliegenden Erfindung miteingeschlossen ist. Das Zusammenstecken der Profilelemente 101' und 101'' erfolgt mittelst Stifte 133.

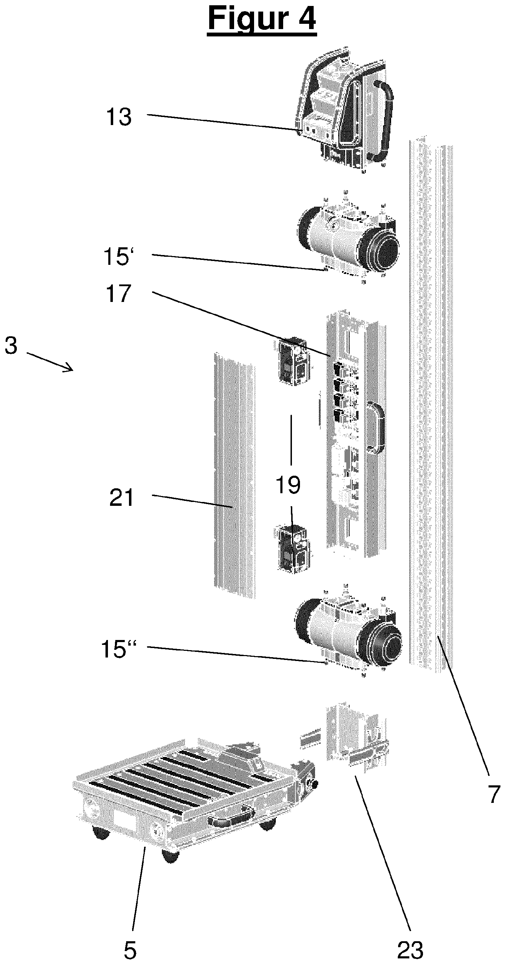

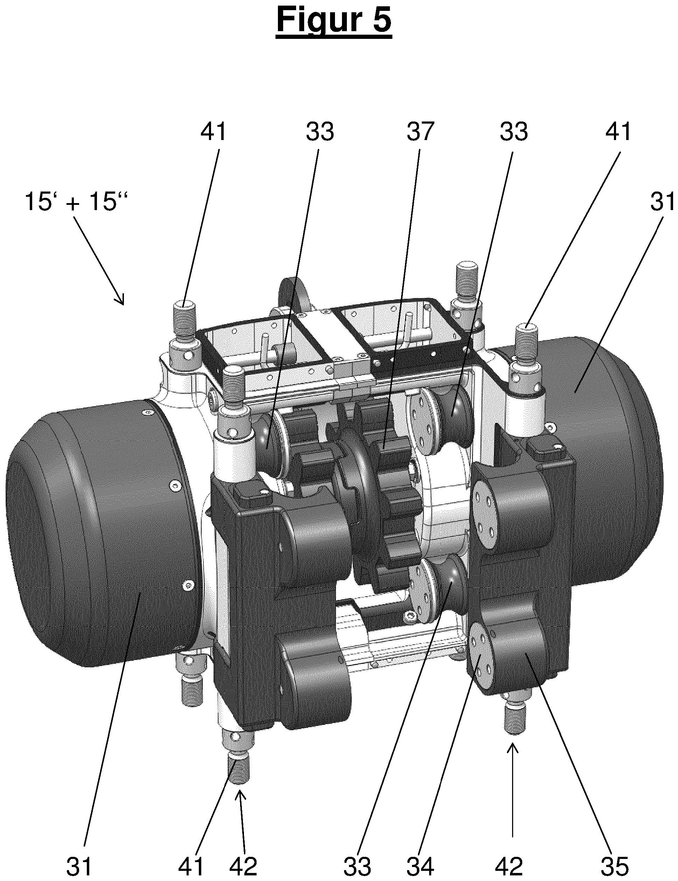

In Figur 4 sind die einzelnen Teile des Liftelementes schematisch dargestellt sowie ausschnittsweise das längsausgedehnte, schienenartige Profil 7. Das Antriebsteil 3 weist beispielsweise 2 Motoreinheiten 15' und 15'' auf, welche dazu dienen, das Liftelement entlang dem schienenartigen Profil 7 aufwärts und abwärts zu bewegen. Auf die Motoreinheit wird in Figur 5 separat detaillierter eingegangen.

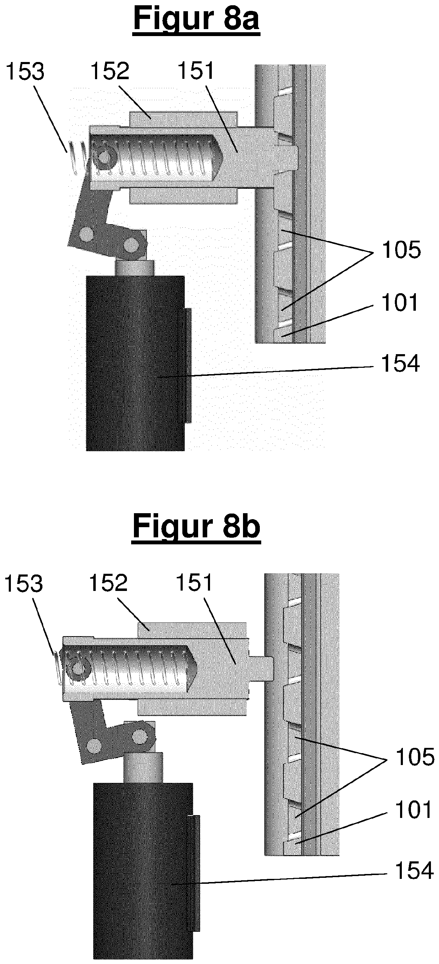

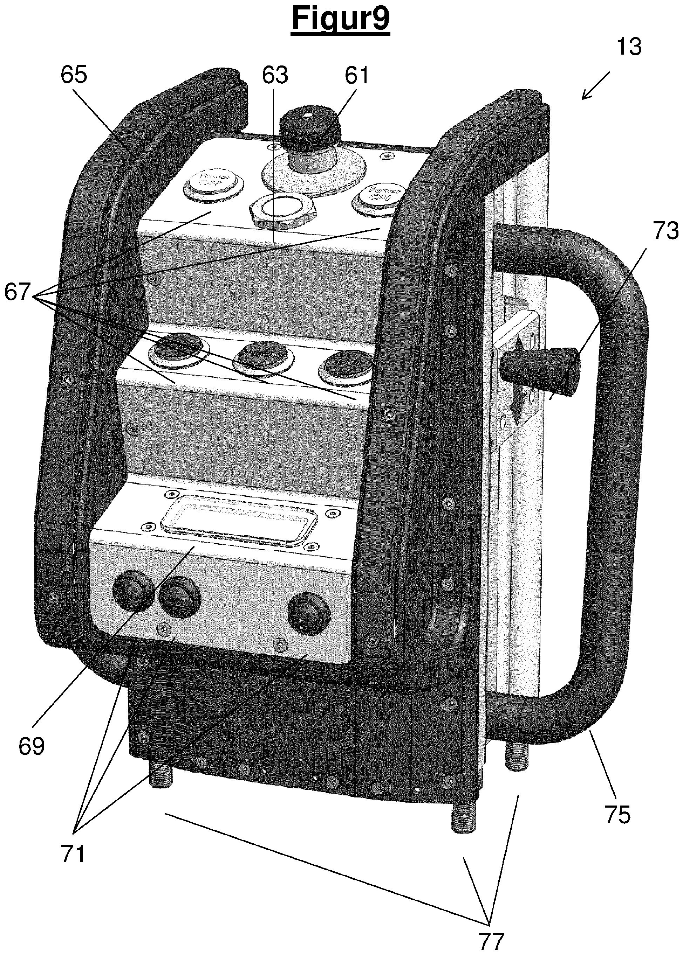

Am oberen Ende des Antriebteils ist ein Kopfteil 13 vorgesehen, welches unter anderem Handgriffe, Bedienungselemente, Anzeigen, Geschwindigkeitssensoren, etc. aufweist. In Figur 9 wird detaillierter auf dieses Kopfteil eingegangen wird. In einem Elektronikgehäuse 19 mit Abdeckung 21 sind verschiedene für den Betrieb des Antriebteils notwendige Elemente wie Sicherheitsrelais, Kontroller, Funk, Notstopporgane, etc. angeordnet. In Figur 4 schematisch dargestellt sind zwei Notstopporgane 19, auf deren Funktion wiederum unter Bezug auf Figur 8 näher eingegangen wird. Am unteren Ende des Antriebteils ist ein Plattformträger 23 vorgesehen, an welchem beispielsweise mittels einer mechanischen oder elektrischen Kupplung die Plattform 5 fest montiert werden kann. In der Plattform 5, aufweisend eine Standfläche für eine Person, ist einerseits eine Halterung für eine Batterie oder einen Akku vorgesehen sowie entsprechende Ladeelektronik.

In Figur 5 ist in Perspektive schematisch in Ansicht vom schienenartigen Profil aus gesehen, ein Antriebsmotor 15' resp. 15'' dargestellt. Für den Antrieb vorgesehen sind Zahnräder 37, welche beispielsweise mit einer integrierten Klauenkupplung verbunden sein können. Der Antrieb der Zahnräder 37 erfolgt mittels einem Antriebsmotor, welcher durch Antriebsabdeckungen 31 je seitlich überdeckt ist. Für das Führen des Antriebteils resp. des Liftelementes sind Laufrollen 33 und 34 vorgesehen, wobei die Laufrollen 34 je um Schwenkachsen 42 geschwenkt werden können, beispielsweise beim festen Anordnen des Antriebteils am schienenartigen Profil oder Führungsorgan. Für die Verbindung des Antriebmotors mit dem Hauptgehäuse resp. dem Elektronikgehäuse oder zur Plattformanbindung sind nockenartigen Stifte 41 vorgesehen.

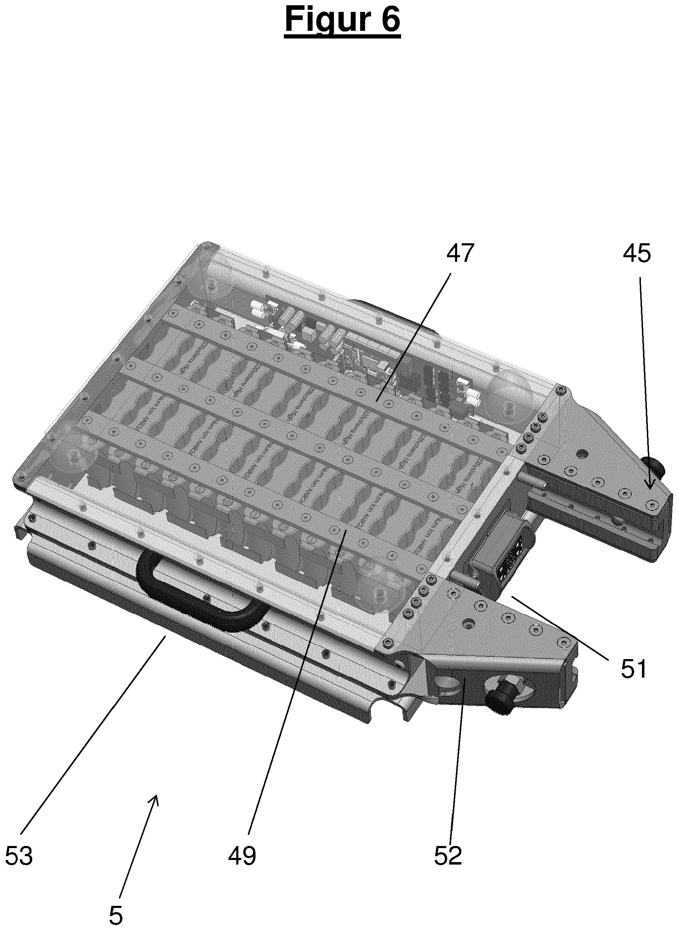

Figur 6 zeigt die Plattform 5 von der Unterseite dargestellt, beispielsweise mit einer transparenten Überdeckung, wodurch eine in der Plattform 5 angeordnete Akkuzelle 49 wie beispielsweise Lithium-Eisenphosphat-Akkuzellen erkennbar ist. Seitlich schematisch bezeichnet mit dem Bezugzeichen 47 ist eine Ladeelektronik, wobei gleichzeitig ein Hauptschalter vorgesehen sein kann, um die Energieversorgung des Antriebteils zu unterbrechen. Frontseitig an der Plattform 5 ist eine elektronische Verbindung 51 zum Antriebsteil vorgesehen und je seitlich Schenkel 52 für das Befestigen am Antriebsteil, in welchen eine mechanische Verriegelung 45 angeordnet sein kann.

Der Vorteil dieser Wiederlösbarkeit der Plattform 5 vom Antriebsteil liegt darin, dass jederzeit zum Auflanden des Akkus dieser zusammen mit der Plattform entfernt werden kann und beispielsweise mittels dem Handgriff 53 leicht transportiert werden kann. Auch ermöglicht die Trennung der Plattform vom Antriebsteil, dass das gesamte Liftelement wesentlich einfacher transportiert werden kann, da damit zwei gut tragbare Elemente geschaffen werden, währenddem das gesamte Liftelement eher schwierig manuell zu transportieren wäre. Auch ermöglicht die Trennbarkeit der Plattform, dass unterschiedliche Akkus verwendet werden können, insbesondere, falls ein Akku defekt ist oder falls eine neue Generation Akkus verwendet werden soll.

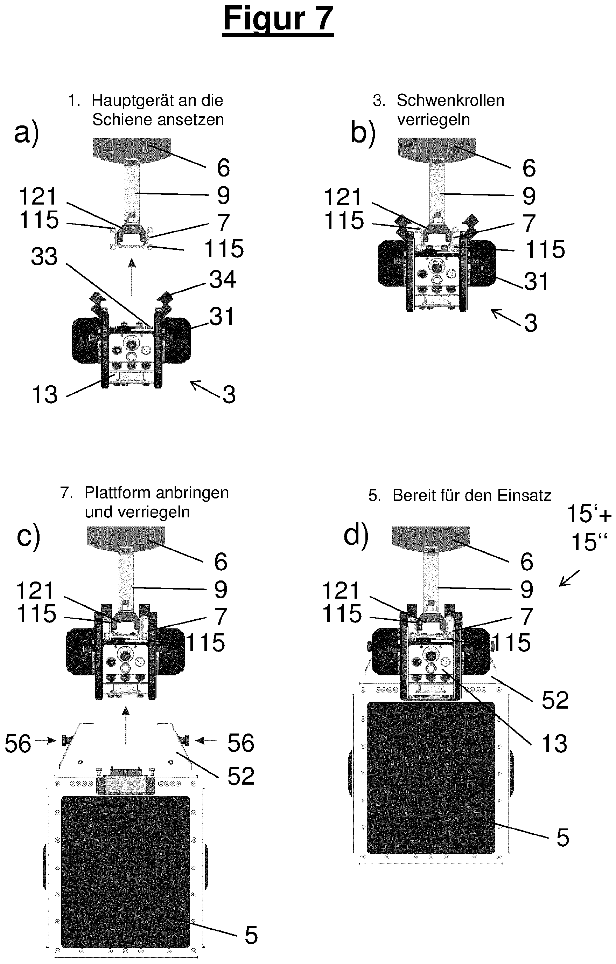

Anhand von Figur 7 wird nun schematisch dargestellt, wie das erfindungsgemässe Liftelement am schienenartigen Profil 7 fest positioniert werden soll. Der ganze Vorgang ist schematisch anhand der Figur a bis d dargestellt.

Figur 7a zeigt das Antriebsteil 3 von Oben gesehen, das heisst sichtbar ist das Kopfteil 13 mit den Bedienungselementen sowie die seitlich vorstehenden Abdeckungen 31 des Antriebsmotors. Das Antriebsteil 3 soll nun am schienenartigen Profil 7 fest angeordnet werden, in welchem ebenfalls Verbindungselement 121 sichtbar ist, sowie vier in den Ecken des Profils angeordnete Längsrohre 115. Das Profil 7 seinerseits ist über ein Montageelement 9 fest an einem Hochspannungsmast 6 angeordnet. Für das feste Anordnen des Antriebteils 3 sind zwei seitlich weggeschwenkte Führungsrollen 34 vorgesehen, welche das schienenartige Profil bei der Montage seitlich umgreifen.

Zunächst wird wie in Figur b dargestellt, das Antriebsteil gegen das schienenartige Profil 7 geführt, bis die beiden näher beim Antriebsteil liegenden Längsrohre 115 in den beiden Laufrollen 33 angreifen. Beim Andrücken an das schienenartige Profil 7 werden nun wie in Figur c dargestellt, automatisch die beiden entfernteren Laufrollen 34, die beiden äusseren Längsrohre 115 umgreifend, einwärts geschwenkt, um das Antriebsteil fest mit dem Profil zu verbinden. Gleichzeitig mit der Einwärtsbewegung werden die Rollen 34 automatisch eingerastet, so dass ein Entfernen des Antriebteils vom Profil 7 verunmöglicht wird.

Falls nun das Antriebsteil 3 fest am Profil 7 angeordnet ist, kann auch die Plattform 5 mit dem Antriebsteil 3 verbunden werden, was schematisch in den beiden Figuren c und d dargestellt ist. Auch beim Anordnen der Plattform 5 ist vorgesehen, dass die unter Bezug auf die Figur 6 beschriebene mechanische Verriegelung 45 automatisch einrastet, so dass ein Entfernen der Plattform 5 verunmöglicht wird. In der Darstellung gemäss Figur 7d ist das Liftelement fest mit dem Profil 7 verbunden, so dass nun beispielsweise ein Monteur einen Hochspannungsmast besteigen kann.

In Figur 8 (a und b) ist ein wichtiges Sicherheitselement dargestellt, welches garantiert, dass ein unkontrolliertes Bewegen des Antriebteils am schienenartigen Profil verunmöglicht wird. Insbesondere verunmöglicht werden soll, dass das Liftelement unkontrolliert abwärts bewegt wird und ebenso unkontrolliert das obere oder das untere Ende des schienenartigen Profils überschiessen kann.

Figur 8a zeigt die Klinke 151 im Ruhezustand, frei bewegbar in Lagerung 152, durch die Feder 153 in die Rasterung 105 der Schiene 101 eingeklinkt. Dadurch ist Antriebsteil 3 fest mit der Schiene 101 verbunden - der Lift kann sich nicht bewegen. Im Notfall wird die Bestromung des Klinkenantriebs (Magneten) 154 unterbrochen, die Feder 153 stösst die Klinke 151 automatisch in die Rasterung 105 der Schiene 101.

Figur 8b zeigt einen Antrieb mit bestromtem Magneten 154, gespannter Feder 153 und zurück gezogener/gespannter Klinke 151. Bei einer normalen und ungestörten Fahrt des Liftes ist die Klinke 151 in dieser hinteren Position gespannt - der Lift kann sich frei bewegen.

Figur 9 zeigt das Kopfteil 13 gemäss Figur 4 detailliert mit den verschiedenen daran angeordneten Organen und Elementen. Oben mittig ist ein Nottaster 61 vorgesehen, mittels welchem eine Notbremsung des Antriebteils bzw. Liftelementes ausgelöst werden kann. Ebenfalls erkennbar ist beispielsweise ein Ultraschallsensor 63 für Remote-Betrieb. Seitlich weist das Kopfteil 13 Schutzblende 65 auf, an welchen seitlich Handgriffe 75 vorgesehen sind, damit sich eine Person des Liftes daran festhalten kann. Ebenfalls seitlich vorgesehen ist ein Wippentaster 73 für Tal- oder Bergfahrt. Dieser Wippentaster kann selbstverständlich links und/oder rechts seitlich angeordnet sein.

Weitere Bedienungselemente 67 sind für den Betrieb des Liftelementes vorgesehen.

An einem Display 69 können verschiedene bedienungs- und betriebsrelevante Daten angezeigt werden, welche mittels weiteren Bedienungselementen 71 einstellbar sind. Auch können mit diesen Bedienungselementen 71 verschiedene Menus angewählt werden, um die unterschiedlichsten Informationen am Display 69 anzuzeigen.

Schliesslich zum Verbinden des Kopfteils bzw. der Kopfkonsole 13 am Antriebsgehäuse sind Verbindungsstifte 77 vorgesehen.

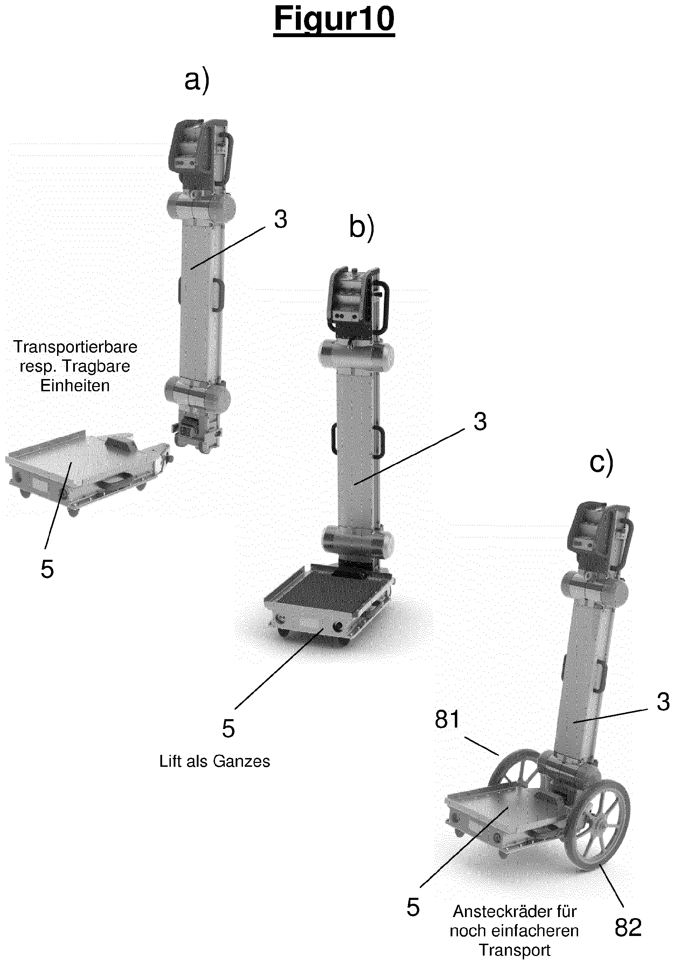

Figur 10 zeigt noch einmal schematisch die verschiedenen Teile des Liftelementes, wobei in Figur 10a Antriebsteil 3 und Plattform 5 für den Transport voneinander getrennt sind. Für den Betrieb werden Plattform 5 und Antriebsteil 3 miteinander verbunden, und gemäss Figur 10c ist es im Weiteren möglich, seitlich Ansteckräder anzuordnen, für den Transport des Liftelementes, falls Plattform und Antriebsteil nicht getrennt werden sollen.

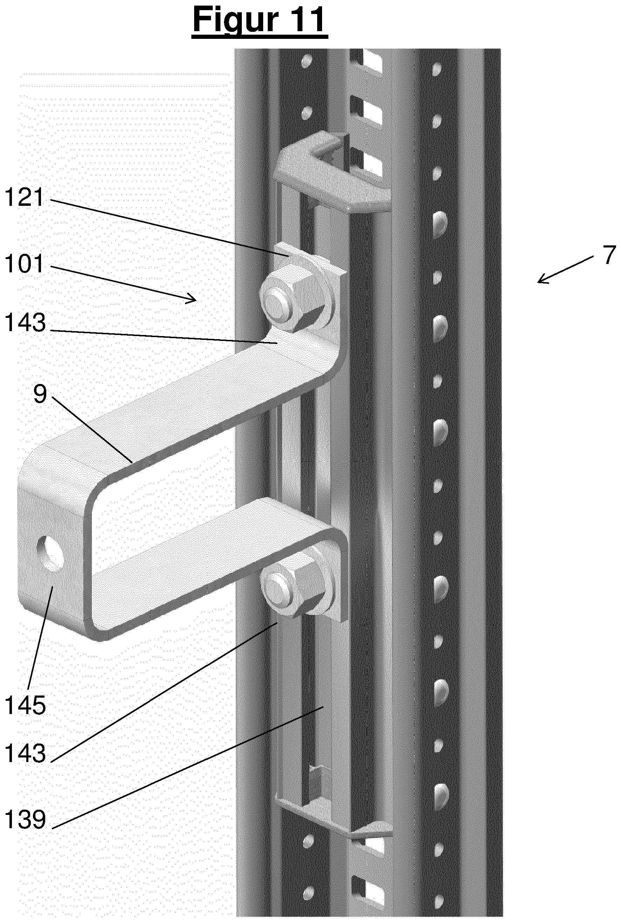

In Figur 11 ist dargestellt, wie mittels des Befestigungsorganes 9 das schienenartige Profil 7 beispielsweise an einem Hochspannungsmast befestigt werden kann. Das schienenartige Profil 7 weist bekanntlich im Bereich zweier aufeinander stossender Profilteile 101 ein Verbindungselement 121 auf, an welchem nun das Befestigungsorgan mittels Schraubverbindungen 143 fest angeordnet werden kann. Das Befestigungsorgan 9 weist auf der dem Profil entgegengesetzten Seite eine lochartige Öffnung 145 auf, mittels welcher das Profil am Hochspannungsmast wiederum mittels beispielsweise einer Schraubverbindung montiert werden kann.

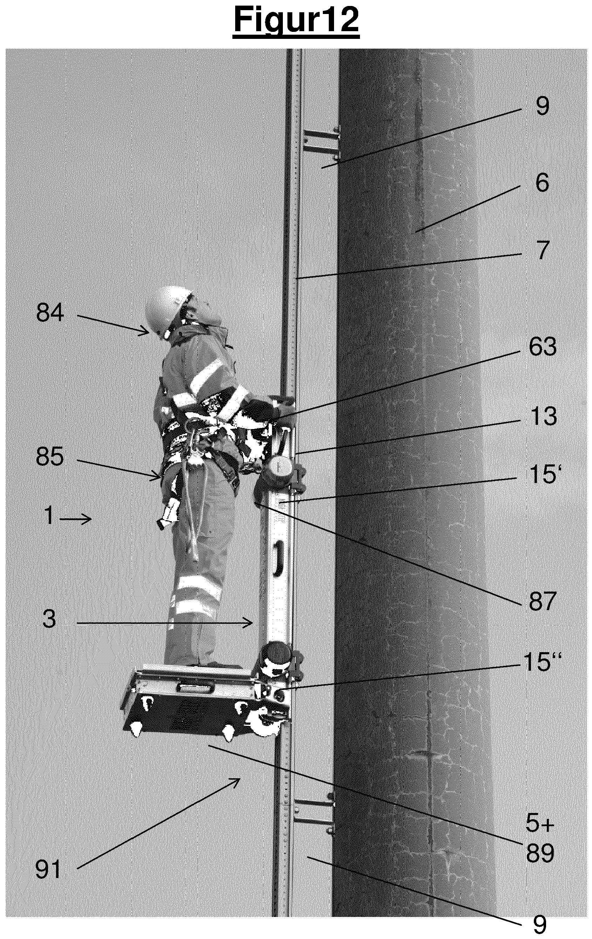

Figur 12 schliesslich zeigt anhand einer Prinzipansicht, wie eine Person 2 mittels dem erfindungsgemässen Liftelement 1 entlang dem schienenartigen Profil 7 einen Hochspannungsmast oder einen Mast einer Windanlage besteigen kann, resp. von diesem wieder absteigen kann. Das erfindungsgemässe Liftelement 1 bestehend aus Antriebsteil 3 und Plattform 5 wird von einer Person 2 benutzt, um entlang dem schienenartigen Profil an einem Hochspannungsmast 6 hinauf zu fahren. Wesentlich dabei ist, dass die Person beispielsweise einen Helm 84 trägt, mittels einem Gurt 85 gesichert ist, wobei das Anschnallen des Gurtes beispielsweise mittels einer Überwachung 87 sichergestellt sein kann. Vorzugsweise ist der Betrieb des Liftelementes mit diesem Überwachungssensor derart gekoppelt, dass ein Betreiben des Liftes nur bei angeschnallter Person durchführbar ist. Weitere Überwachungselemente können vorgesehen sein, um eine Überlastung bei der Plattform mittels einem Lastsensor 89 sicherzustellen, um den Betrieb mittels einem beispielsweise im Bereich der Plattform angeordneten Geschwindigkeitssensor 91 zu überwachen etc., etc.

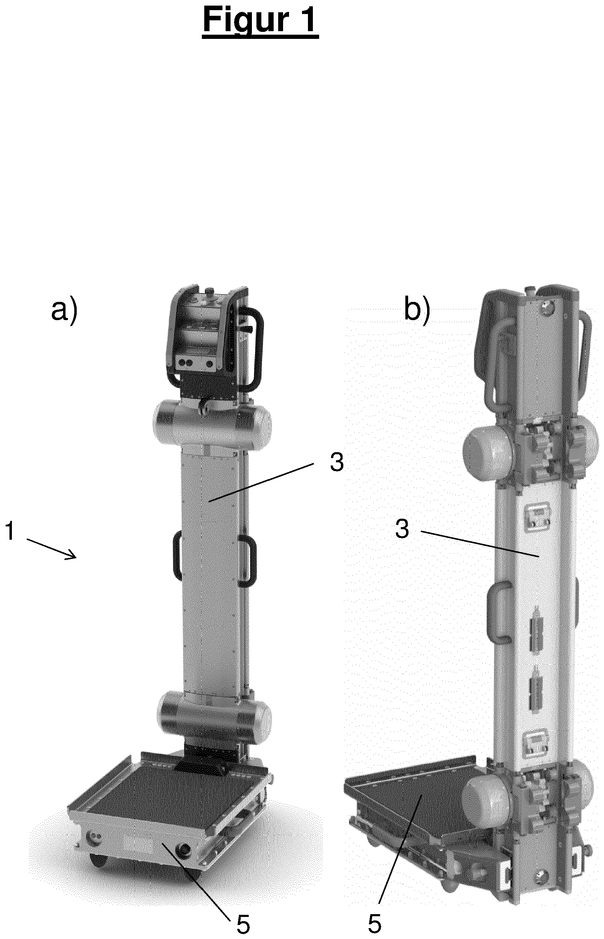

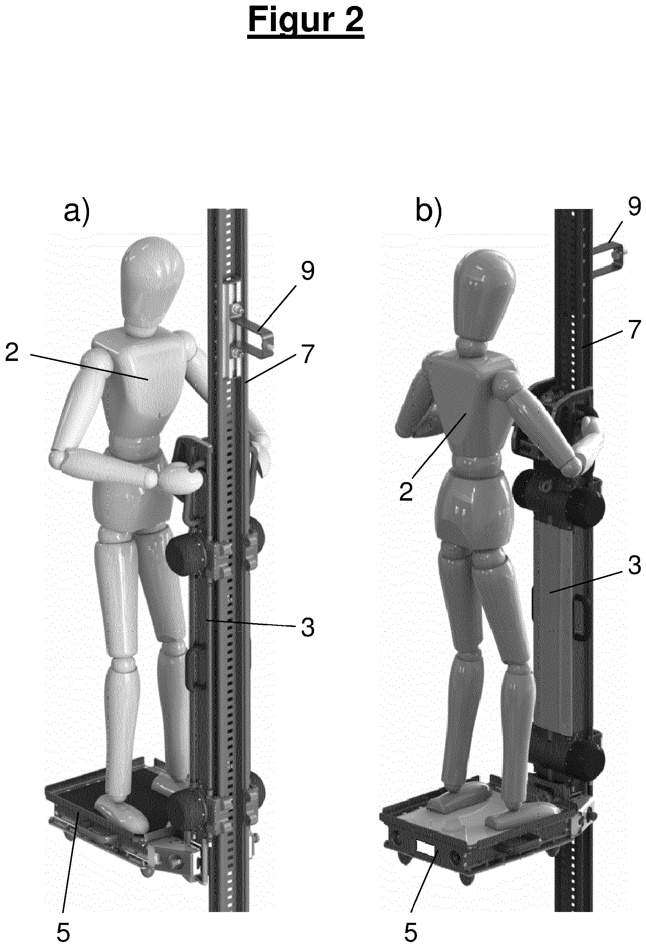

Die unter Bezug auf die Figur 1 bis 12 dargestellten Elemente, Profilteile, Bestandteile des Liftelementes und so weiter stellen nur Beispiele dar zur besseren Erläuterung der vorliegenden Erfindung. Selbstverständlich ist die Ausgestaltung den jeweiligen Bedürfnissen anzupassen und das erfindungemäss dargestellte Liftelement kann durch weitere Bestandteile ergänzt werden. Auch die Ausgestaltung des schienenartigen Profils kann unterschiedlich sein, die U-förmige Ausgestaltung stellt lediglich ein Beispiel dar. Anstelle des erwähnten und in den Figuren beschriebenen schienenartigen Profils sind auch andersartig ausgestaltete Führungsorgane denkbar für das auf- und abwärts bewegen des beschriebenen Liftelementes. Denkbar ist bspw. ein ständerartiges Führungsorgan oder ein- oder mehrteilige stangenartige Führungsorgane, an welchen das Liftelement befestigt und bewegt werden kann. Aber auch an bspw. Hochspannungsmasten fest angeordnete Führungsseile können ggf. geeignet sein für das widerlösbare Anbringen des erfindungsgemäss beschriebenen Liftelementes.

Vorteilhaft ist, dass das Liftelement mindestens zweiteilig sein kann, bestehend aus einem Antriebsteil und einer Plattform, welche wieder lösbar mit dem Antriebsteil verbindbar ist. Das Liftelement soll unabhängig, tragbar und mobil sein und von Anwendungsort zu Anwendungsort (vielen fix installierten Schienen) gebracht werden. Bezüglich Tragbarkeit sei auf die jeweiligen gesetzlichen Bestimmungen verwiesen, in welchen entsprechende Vorschriften definiert sind, wie bspw. ein Gewicht von maximal 30kg. Die Mobilität wird weiter unterstützt, indem das Liftelement in Leichtbauweise gefertigt ist, beispielsweise durch Verwendung von Leichtbauwerkstoffen wie Aluminium, Aluminiumlegierungen, faserverstärkte Verbundwerkstoffe, etc.. Der Antrieb wird von einem Akku oder einem Brennstoffspeicher gespiesen, welcher am Liftelement selbst angeordnet ist, um eine vollständige Autonomie des Liftelementes vom schienenartigen Profil oder Führungsorgan zu garantieren. Schliesslich erwähnt sei, dass die Bedienung des Liftelementes auch drahtlos ferngesteuert erfolgen kann, das heisst, der Antrieb kann ferngesteuert bedienbar sein.

## Patentansprüche

1. Anordnung zum Überwinden von Höhen bzw. wenigstens weitgehendst vertikalen Distanzen wie insbesondere an Hochspannungsmasten, Masten für Windanlagen, Gebäuden, Hochregallager, etc., aufweisend:
- ein mindestens längsausgedehntes, schienenartiges Profil (7) oder Führungsorgan, dass U-, V- oder wenigstens nahezu gerade, bandförmig ausgebildet ist,
- mindestens ein am Profil (7) oder Führungsorgan wieder lösbar befestigbares Liftelement (1) bestehend aus einem entlang dem Profil (7) oder Führungsorgan auf und ab bewegbaren Antriebsteil (3) und einer Plattform (5) für das Aufnehmen von mindestens einer Person (2) oder von Lasten, wobei der Antrieb des Antriebteils (3) von einem im Liftelement (1) angeordneten Energiespeicher, wie einem Akku (49), einer Batterie oder einem Brennstoffspeicher, speisbar ist, **dadurch gekennzeichnet, dass** am Antriebsteil (3) das Profil (7) oder Führungsorgan in Längsrichtung gesehen, je seitlich umgreifende Festhalteorgane (34) vorgesehen sind, welche in festlegender Position einrastbar sind, um ein sicheres Halten des Antriebteils (3) am Profil (7) oder Führungsorgan sicherzustellen.

2. Anordnung nach Anspruch 1, **dadurch gekennzeichnet, dass** der Energiespeicher wie der Akku (49), die Batterie oder der Brennstoffspeicher wieder entfernbar im Liftelement (1), vorzugsweise in der Plattform (5) angeordnet ist.

3. Anordnung nach einem der Ansprüche 1 oder 2, **dadurch gekennzeichnet, dass** die Plattform (5) wieder entfernbar mit dem Antriebsteil (3) verbunden ist.

4. Anordnung nach einem der Ansprüche 1 bis 3, **dadurch gekennzeichnet, dass** das Liftelement (1) vom schienenartigen Profil (7) oder Führungsorgan tragbar und autonom ist und für Mobilität und Tragbarkeit in Leichtbauweise gefertigt ist, bestehend mindestens teilweise aus Aluminium, einer Aluminiumlegierung, aus faserversträktem Verbundwerk und/oder dergleichen.

5. Anordnung nach einem der Ansprüche 1 bis 4, **dadurch gekennzeichnet, dass** am Antriebsteil (3) mindestens ein Zahnrad vorgesehen ist, für die Kraftübertragung von Antrieb auf in Längsrichtung zahnstangenförmige Lochungen oder Öffnungen im schienenartigen Profil (7) oder Führungsorgan.

6. Anordnung nach einem der Ansprüche 1 bis 4, **dadurch gekennzeichnet, dass** am Antriebsteil (3) ein Notstopporgan vorgesehen ist, welches mit einem Positions-, Bewegungs- und/oder Geschwindigkeitsensor wirkverbunden ist, derart, dass bei normabweichenden Betriebsbedingungen automatisch ein Notstopp ausgelöst wird.

7. Anordnung nach einem der Ansprüche 1 bis 6, **dadurch gekennzeichnet, dass** das schienenartige Profil (7) oder Führungsorgan aus mindestens zwei oder mehr zusammenfügbaren oder steckbaren Profilelementen, mindestens aufweisen eine in Längsrichtung verlaufenden Zahnstangeneinteilung besteht, wobei in mindestens einer Wandung jedes Profilelementes verlaufende gleichmässig beabstandete Musterlochungen bestehen, welche mit der Zahnstangeneinteilung gekoppelt sind und dass je zwei Profilelemente mit einem Verbindungselement verbunden sind, aufweisend mindestens eine weitere Wandung, vorgesehen um je an den Wandungen der beiden Profilelemente anzuliegen, mit längsverlaufenden weiteren Musterlochungen, welche deckungsgleich sind mit den Musterlochungen in den Wandungen je des Profilelementes, wobei die Musterlochungen in den Wandungen übereinstimmend beabstandet und somit deckungsgleich sind und wobei Verbindungsorgane wie Nieten, Schrauben, Steckstifte, etc. vorgesehen sind um die Profilelemente und das Verbindungselement in den Musterlochungen fest miteinander zu verbinden.

8. Anordnung nach einem Ansprüche 1 bis 7, **dadurch gekennzeichnet, dass** die Festhalteorgane (34) beim Anlegen des Antriebteils (3) am schienenartigen Profil (7) oder Führungsorgan je seitlich das Profil (7) oder Führungsorgan hintergreifend verriegelbar bzw. einklappbar sind.

9. Anordnung nach einem der Ansprüche 1 bis 8, **dadurch gekennzeichnet, dass** ein Sicherungsorgan wie eine Mannsicherung vorgesehen ist, um eine das Liftelement (1) benutzende Person (2) zu sichern und dass weitere Detektionsmittel vorgesehen sind, welche das betriebssichere Anordnen des Sicherungsorgans detektieren, um den Betrieb des Liftelementes (1) gegebenenfalls bei nicht ordnungsgemässer Sicherung zu blockieren.

10. Anordnung nach einem der Ansprüche 1 bis 9, **dadurch gekennzeichnet, dass** der Energiespeicher wieder entfernbar in der Plattform (5) angeordnet ist, derart, dass durch Auswechslung der Plattform (5) auch ein Wechsel des Energiespeichers ermöglicht wird resp. ein Wiederaufladen des Energiespeichers entfernt vom Antriebsteil (3) realisierbar ist.

11. Anordnung nach einem der Ansprüche 1 bis 10, **dadurch gekennzeichnet, dass** das Antriebsteil (3) bzw. das Liftelement (1) drahtlos ferngesteuert betreibbar ist.

12. Verfahren zum Besteigen von hohen Masten wie Hochspannungsmasten, Masten von Windanlagen und dergleichen, **dadurch gekennzeichnet, dass** an einem am Masten befestigten längsausgedehnten, schienenartigen Profil (7) oder Führungsorgan ein vom Profil (7) oder Führungsorgan autonomes, mobiles und vorzugsweise tragbares Liftelement (1) am Profil (7) oder Führungsorgan mittels einrastbaren, das Profil (7) oder am Führungsorgan je seitlich hintergreifenden oder angreifenden Festhalteorganen (34) angeordnet wird, dass eine wieder entfernbar mit einem Antriebsteil (3) verbundene Plattform (5) von mindestens einer Person (2) bestiegen wird oder mit einer Last beladen wird und das Antriebsteil (3) von einem Energiespeicher wie einem Akku (49), einer Batterie oder einem Brennstoffspeicher gespiesen, aktiviert wird, um entlang des schienenartigen Profils (7) oder Führungsorgans am Masten hochzufahren.

13. Verfahren nach Anspruch 12, **dadurch gekennzeichnet, dass** nach beendetem Besteigen und wieder Herunterfahren das Liftelement (1), wie insbesondere das Antriebsteil (3) wieder vom schienenartigen Profil (7) oder Führungsorgan entfernt wird, um gegebenenfalls für die Besteigung eines weiteren Mastes benutzt zu werden.

## Claims

1. An arrangement for overcoming heights or at least largely vertical distances, such as in particular on high-voltage masts, masts for wind turbines, buildings, high-bay warehouses, etc., having:
- an at least longitudinally extended, rail-like profile (7) or guide member, which has a U-shaped design, V-shaped design or is designed essentially straight in the form of a band,
- at least one lift element (1), which is attached releasably to the profile (7) or guide member, consisting of a drive part (3), which can be moved up and down along the profile (7) or guide member, and a platform (5) for receiving at least one person (2) or loads, wherein the drive of the drive part (3) is suppliable by an energy storage unit, such as a rechargeable battery (49), a battery or a fuel storage tank, located in the lift element (1), **characterised in that** holding members (34), which each laterally engage around the profile (7) or guide member, as seen in the longitudinal direction, are provided on the driving part (3), said holding members (34) being latchable into a fixing position in order to ensure secure holding of the driving part (3) on the profile (7) or guide member.

2. The arrangement according to claim 1, **characterised in that** the energy storage unit, such as the rechargeable battery (49), the battery or the fuel storage tank, is arranged in the lift element (1), preferably in the platform (5), in a removable manner.

3. The arrangement according to claim 1 or 2, **characterised in that** the platform (5) is removably connected to the drive part (3).

4. The arrangement according to one of claims 1 to 3, **characterised in that** the lift element (1) is portable and autonomous from the rail-like profile (7) or guide member and is manufactured in lightweight construction for mobility and portability, consisting at least partly of aluminium, an aluminium alloy, a fibre-reinforced composite structure and/or the like.

5. The arrangement according to one of claims 1 to 4, **characterised in that** at least one gear wheel is provided on the drive part (3), for the transmission of force from the drive to longitudinally rack-shaped perforations or openings in the rail-like profile (7) or guide member.

6. The arrangement according to one of claims 1 to 4, **characterised in that** an emergency stop device is provided on the drive part (3), which is actively connected to a position, motion and/or speed sensor in such a way that an emergency stop is automatically triggered under abnormal operating conditions.

7. The arrangement according to one of claims 1 to 6, **characterised in that** the rail-like profile (7) or guide member consists of at least two or more profile elements that can be joined or plugged together, at least having a longitudinal rack and pinion division, wherein in at least one wall of each profile element there are evenly spaced pattern perforations, which are coupled with the rack and pinion division and that two profile elements are connected with a connecting element, having at least one further wall, provided to abut to the walls of the two profile elements, with further longitudinal pattern perforations, which are congruent with the pattern perforations in the walls of each profile element, wherein the pattern perforations in the walls are correspondingly spaced apart and are therefore congruent, and connecting elements, such as rivets, screws, plug-in pins, etc., are provided to connect the profile elements and the connecting element firmly in the pattern perforations.

8. The arrangement according to one of claims 1 to 7, **characterised in that** the holding members (34) can each be latched or folded inwardly to engage laterally and behind the profile (7) or guide member when the drive part (3) is applied to the rail-like profile (7) or guide member.

9. The arrangement according to one of claims 1 to 8, **characterised in that** a safety device such as a man safety device is provided to secure a person (2) using the lift element (1) and that further detection means are provided which detect the operationally safe arrangement of the safety device in order to block the operation of the lift element (1) if necessary in the event of improper securing.

10. The arrangement according to one of claims 1 to 9, **characterised in that** the energy storage unit is removably arranged in the platform (5), in such a way that by replacing the platform (5) it is also possible to change the energy storage device or to recharge the energy storage device remote from the drive part (3).

11. The arrangement according to one of claims 1 to 10, **characterised in that** the drive part (3) or the lift element (1) can be operated by wireless remote control.

12. A method for climbing high masts such as high-voltage masts, masts of wind turbines and the like, **characterised in that** on a longitudinally extended, rail-like profile (7) or guide member attached to the mast a mobile and preferably portable lift element (1), which is autonomous from the profile (7) or guide member, is attached to the profile (7) or guide member by means of a holding device (34) which engages behind the profile (7) or the guide member from the side, **in that** a platform (5) which is removably connected to a drive part (3) is climbed by at least one person (2) or is loaded with a load, and **in that** the drive part (3) powered by an energy storage device, such as a rechargeable battery (49), a battery or a fuel storage system, is activated to drive up on the mast along the rail-like profile (7) or guide member.

13. The method according to claim 12, **characterised in that** after the climbing and driving down has been completed, the lift member (1), in particular the drive part (3), is removed from the rail-like profile (7) or guide member again in order to possibly be used for climbing a further mast.

## Revendications

1. Dispositif destiné à franchir des hauteurs ou des distances au moins essentiellement verticales, comme par exemple des pylônes haute tension, des mâts d'éoliennes, des immeubles, des rayonnages en hauteur, etc. comprenant :
- un profilé (7) ou organe de guidage allongé de type rail, réalisé en forme de U, de V ou en forme de bande presque droite,
- au moins un élément de levage (1) pouvant être fixé de façon amovible au profilé (7) ou à l'organe de guidage, composé d'une partie d'entraînement (3) mobile vers le haut et vers le bas le long du profilé (7) ou de l'organe de guidage, et d'une plateforme (5) destinée à recevoir au moins une personne (2) ou des charges, l'entraînement de la partie d'entraînement (3) étant alimenté par un système de stockage d'énergie agencé dans l'élément de levage (1), tel qu'un accumulateur (49), une batterie ou un réservoir de combustible, **caractérisé en ce qu'**il est prévu sur la partie d'entraînement (3) des organes de retenue (34) qui, vus dans le sens longitudinal, entourent latéralement le profilé (7) ou l'organe de guidage et qui peuvent être encliquetés dans une position déterminée afin d'assurer un maintien sûr de la partie d'entraînement (3) sur le profilé (7) ou l'organe de guidage.

2. Dispositif selon la revendication 1, **caractérisé en ce que** le système de stockage d'énergie, tel que l'accumulateur (49), la batterie ou le réservoir de combustible est agencé de façon amovible dans l'élément de levage (1), de préférence dans la plateforme (5).

3. Dispositif selon l'une des revendications 1 ou 2, **caractérisé en ce que** la plateforme (5) est raccordée de façon amovible à la partie d'entraînement (3).

4. Dispositif selon l'une des revendications 1 à 3, **caractérisé en ce que** l'élément de levage (1) est mobile et autonome par rapport au profilé (7) en forme de rail ou à l'organe de guidage et est fabriqué dans une construction légère pour la mobilité et la portabilité, constituée au moins en partie d'aluminium, d'un alliage d'aluminium, d'un matériau composite renforcé par des fibres et/ou analogue.

5. Dispositif selon l'une des revendications 1 à 4, **caractérisé en ce qu'**il est prévu sur la partie d'entraînement (3) au moins une roue dentée pour transmettre la force d'entraînement à des perforations ou ouvertures en forme de pignon dans le sens longitudinal dans le profilé en forme de rail (7) ou l'organe de guidage.

6. Dispositif selon l'une des revendications 1 à 4, **caractérisé en ce qu'**il est prévu sur la partie d'entraînement (3) un organe d'arrêt d'urgence en liaison active avec un capteur de position, de mouvement et/ou de vitesse, de manière à ce qu'en cas de conditions de fonctionnement anormales, un arrêt d'urgence se déclenche automatiquement.

7. Dispositif selon l'une des revendications 1 à 6, **caractérisé en ce que** le profilé en forme de rail (7) ou l'organe de guidage est constitué d'au moins deux éléments de profilé ou plus pouvant être assemblés ou emboîtés, et d'au moins une crémaillère s'étendant dans le sens longitudinal, au moins une paroi de chaque élément profilé étant pourvue de perforations espacées de façon régulière couplées à la crémaillère, et **en ce que** deux éléments profilés sont reliés par un élément de liaison comprenant au moins une autre paroi destinée à être appliquée contre les parois des deux éléments profilés, avec d'autres perforations longitudinales qui coïncident avec les perforations des parois de l'élément profilé, les perforations dans les parois étant espacées de manière correspondante et étant donc alignées, et **en ce qu'**il est prévu des organes de liaison tels que des rivets, des vis, des goupilles, etc. pour relier solidement entre eux les éléments profilés et l'élément de liaison dans les perforations.

8. Dispositif selon l'une des revendications 1 à 7, **caractérisé en ce que** les organes de retenue (34) peuvent être verrouillés ou rétractés en s'engageant latéralement derrière le profilé (7) ou l'organe de guidage lors de l'application de la partie d'entraînement (3) contre le profilé en forme de rail (7) ou l'organe de guidage.

9. Dispositif selon l'une des revendications 1 à 8, **caractérisé en ce qu'**il est prévu un organe de sécurité tel qu'une sécurité pour l'utilisateur afin de protéger la personne (2) utilisant l'élément de levage (1), et **en ce qu'**il est prévu d'autres moyens de détection qui détectent le bon positionnement de l'organe de sécurité afin de bloquer le fonctionnement de l'élément de levage (1), le cas échéant, si la sécurité n'est pas conforme.

10. Dispositif selon l'une des revendications 1 à 9, **caractérisé en ce que** le dispositif de stockage d'énergie est agencé de manière amovible dans la plateforme (5), de telle sorte qu'il est possible, en changeant la plateforme (5), de changer également le dispositif de stockage d'énergie ou de recharger le dispositif de stockage d'énergie à distance de la partie d'entraînement (3).

11. Dispositif selon l'une des revendications 1 à 10, **caractérisé en ce que** la partie d'entraînement (3) ou l'élément de levage (1) peut être actionné(e) à distance sans fil.

12. Procédé pour grimper sur des pylônes élevés tels que des pylônes haute tension, des mâts d'éoliennes et analogues, **caractérisé en ce qu'**il est agencé sur un profilé (7) en forme de rail ou organe de guidage, s'étendant longitudinalement et fixé au pylône, un élément de levage (1) autonome, mobile et de préférence portable par rapport au profilé (7) ou à l'organe de guidage au moyen d'organes de retenue (34) venant en prise ou s'engageant latéralement derrière le profilé (7) ou l'organe de guidage, **en ce qu'**une personne monte ou une charge est installée sur une plateforme (5) reliée de manière amovible à une partie d'entraînement (3), et **en ce que** la partie d'entraînement (3) alimentée par un dispositif de stockage d'énergie tel qu'un accumulateur (49), une batterie ou un réservoir de combustible, est activée pour monter le long du profilé en forme de rail (7) ou de l'élément de guidage sur le pylône.

13. Procédé selon la revendication 12, **caractérisé en ce que**, une fois l'ascension et la descente terminées, l'élément de levage (1), comme en particulier la partie d'entraînement (3), est à nouveau retiré du profilé en forme de rail (7) ou de l'organe de guidage, pour être le cas échéant utilisé pour monter sur un autre pylône.
